(19) Europäisches Patentamt / European Patent Office / Office européen des brevets

(11) **EP 3 917 076 A1**

(12) **EUROPEAN PATENT APPLICATION**

(43) Date of publication:
**01.12.2021 Bulletin 2021/48**

(51) Int Cl.:
***H04L 9/32*** (2006.01)

(21) Application number: **20177099.7**

(22) Date of filing: **28.05.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **LARMUSEAU, Adriaan Joris H.
5656 AE Eindhoven (NL)**

• **GU, Hai
5656 AE Eindhoven (NL)**
• **MA, Fulong
5656 AE Eindhoven (NL)**
• **GE, Xin
5656 AE Eindhoven (NL)**

(74) Representative: **Philips Intellectual Property &
Standards
High Tech Campus 5
5656 AE Eindhoven (NL)**

(54) **A ZERO KNOWLEDGE PROOF METHOD FOR CONTENT ENGAGEMENT**

(57) A computing device (UD) and relates method for invention details a technique for conducting privacy preserving cryptographic proofs of data consumption. The device content comprises a user authentication mechanism (UAM), One the user is authenticated, a trusted platform module (TPM) digitally signs, based on a private cryptographic key pair of the computing device (UD) including a private key (PTK) and a public key (TK), data identifiers (CID) of consumable data provided by a data provider (VP). The module (TPM) encrypts the public cryptographic key (TK) to obtain a first ciphertext (BTK), and provides the first ciphertext (BTK) and the signed data identifiers (CID) to facilitate a zero-knowledge proof of data consumption by the computing device (UD).

**FIG. 1**

**Description**

FIELD OF THE INVENTION

The invention relates to a computing device, a cryptographic zero-knowledge prover component, methods for facilitating an anonymized proof on data consumption by a computing device, a computer program element and to a computer readable medium.

BACKGROUND OF THE INVENTION

Trusted platform modules and biometric login methods may be used with electronic user devices, for example, TVs, laptops, and others, to create digitally viable traces of data consumption by those devices.

Data consumption may for instance include user content viewing or other forms of data engagement. Such user generated traces of data consumption may be usefully leveraged in a range of different technical applications. However, the data consumption traces may include privacy information of users which may not be divulged due to privacy concerns and regulations.

For example, in today's interconnected environment, there are billions of users using billions of such devices. Data maintenance and remote diagnostics is a challenge. Such electronic devices do on occasion malfunction and the user may wish to have the device repaired, but may feel reluctant to provide their details to certain parties, such as device maintenance providers, online repair shops, or similar. The device maintenance providers however may need to ask the user to run certain diagnostic applications to cause test imagery, or audio signals to be output by the devices, to so ascertain clues about the underlying malfunctioning root cause, etc. For example, the user may be asked to view test imagery to calibrate a television set for instance, and maintenance personal need some indications that the test imagery is being displayed on user's screen. However, at least at this diagnostic phase, the user may not wish to share privacy compromising data with the repairer.

In another scenario, device manufacturers sometimes realize that due to manufacturing errors, devices have been rolled out which are defective in certain scenarios but may not know the exact extent to which this is so. Manufacturers may for instance wish to establish how many of a batch of rolled-out devices are actually malfunctioning but can ascertain this only with certainty if certain checks are performed on the devices by the users. The users however may not wish to engage with the manufacturer for privacy concerns.

In a still other scenario, authorities in national emergency situations or similar may wish to disseminate information such as warning messages or crisis management instructions etc., to user devices such as phones, tablets, etc., and may seek an estimate on the number of members of the public that may have engaged (e.g., viewed, listened to, etc.), with this information through their devices. Again, in this scenario of information dissemination, users may not wish to share any data that may infringe on their privacy rights.

SUMMARY OF THE INVENTION

There may be a need for a technical solution to estimate data consumption in a privacy preserving manner. The proposed systems and methods allow to address at least some of the above described needs.

The object of the present invention is solved by the subject matter of the independent claims where further embodiments are incorporated in the dependent claims. It should be noted that the following described aspect of the invention equally applies to the cryptographic zero-knowledge prover component, to the methods for facilitating an anonymized proof on data consumption by a computing device, to the computer program element and to the computer readable medium.

According to a first aspect of the invention there is provided a computing device, comprising:

a user authentication mechanism that allows switching the device from a data consumption barring mode into a data consumption mode upon authentication of a user credential;
a trusted platform module configured to:

digitally sign, based on a private cryptographic key pair of the computing device including a private key and a public key, one or more data identifiers of consumable data provided by a data provider and receivable at an input interface of the device, upon the user authentication mechanism authenticating the user credential and switching the device into said data consumption mode,
encrypt the public cryptographic key to obtain a first ciphertext, and provide the first ciphertext and the signed one or more data identifiers to facilitate a zero-knowledge proof of data consumption by the computing device.

In one embodiment, the first ciphertext is randomized.

In one embodiment, the user authentication mechanism is configured to capture the user credential in form of any one or more of: i) a passcode, ii) biometric data.

In one embodiment, the user authentication mechanism comprises a camera configured to acquire as biometric data imagery of at least a part of the user.

In another aspect there is provided a cryptographic zero-knowledge prover component, configured to:

a) generate a proof message capable of being processed in a zero-knowledge protocol to verify i) one or more data identifiers associated with consumable data provided by a data provider to a computing device, and/or ii) a ciphertext of a public key of the said computing device, and/or

b) generate a proof message capable of being processed in zero-knowledge protocol to verify the ciphertext of the said public key against a second ciphertext of said public key.

In one embodiment, the said ciphertext of the said public key is to be verified against a set of such ciphertexts.

In one embodiment, the said prover component is part of the device as per any one of the above mentioned embodiments.

In another aspect there is provided a method for facilitating a zero-knowledge proof on data consumption by a computing, the computing device having a public cryptographic key, and the device includes, or is associated with, a user authentication mechanism that allows switching the computing device from a data consumption barring mode into a data consumption mode upon authentication of a user credential, the method, after user authentication, comprising the steps of:

verifying i) one or more data identifiers associated with consumable data provided by a data provider to the computing device, and ii) a ciphertext of the said public key; and/or

verifying the ciphertext of the said public key against a second ciphertext of said public key TK held in a registry remote from the said computing device.

In one embodiment, the verifying by the second zero knowledge proof verifier component is against a set of such second ciphertexts held in the registry.

In one embodiment, the one or more identifier previously signed based on a private key associated with the public key.

In one embodiment, the ciphertext of the said public key is randomized and/or wherein the second ciphertext of said public key is randomized.

In one embodiment, the user credential includes any one or more of: i) a password and ii) biometric data.

In another aspect there is provided a method of facilitate an anonymized zero-knowledge proof on data consumption by a computing device, comprising the steps of:

generating a proof message capable of being processed in a zero-knowledge protocol to verify i) one or more data identifiers associated with consumable data provided by a data provider to a computing device, and/or ii) a ciphertext of a public key of the said computing device, and/or

generating a proof message capable of being processed in zero-knowledge protocol to verify the ciphertext of the said public key against a second ciphertext of said public key.

In another aspect of the invention there is provided a method for facilitating a zero-knowledge proof on data consumption by a computing, the computing device having a public cryptographic key, and the device includes, or is associated with, a user authentication mechanism that allows switching the computing device from a data consumption barring mode into a data consumption mode upon authentication of a user credential, the method, after user authentication, comprising the steps of:

digitally signing, based on a private cryptographic key pair of the computing device including a private key and a public key, one or more data identifiers of consumable data provided by a data provider and receivable at an input interface of the device, upon the user authentication mechanism authenticating the user credential and switching the device into said data consumption mode,

encrypting the public cryptographic key to obtain a first ciphertext, and

providing the first ciphertext and the signed one or more data identifiers to facilitate a zero-knowledge proof of data consumption by the computing device.

The proposed electronic computing device (referred to herein as user device) and related methods allow facilitating a cryptographic zero-knowledge-proof of data consumption by the user device. The user device may include portables, such as (smart-) phones, tablets, mobile streaming devices, and others, but may also include devices for stationery use, such as television sets, desktop computers, stationery streaming devices, etc.

Whilst it may not necessarily be the case that data consumption by the device, or the user's engagement with the data, can be established with absolute certainty, in the proposed system, the data provided by the device for processing in a proposed cryptographic proof protocol may still furnish a reasonable estimate, or ground of sufficient probability to assume, that such data consumption has occurred. This is because, in the proposed system, the user authentication mechanism of the device is harnessed. Once the user is authenticated, identifiers of the provided data are digitally signed using the private-public key pair of the user device. Specifically, and as envisaged herein, the availability of data identifiers cryptographically signed with an eligible key (pair) is deemed herein as an indicator that data consumption has occurred. The data identifiers relate to the data provided to the device. However, making the said public key of the user device available in plaintext so that the signed data identifiers can be checked against the public key, may compromise user's privacy as the public key may be linkable to the user device and hence the user. It is therefore envisaged herein to cryptographically hide the user device's public key, and to make the so hidden ("blinded") public key available for a zero-knowledge ("zk"-) cryptographic proof protocol to anonymously check the signed traces. A verifier party may thus use the signed traces and the blinded key in a zk-protocol to still verify data consumption in the above mentioned sense. And yet, the public key cannot be linked to the device. In addition, it may be proved in the protocol that the blinded key is in effect related to the plaintext key, again without revealing the plaintext public key itself.

In embodiments, a zk-SNARK protocol is used to obfuscate the public key of the user device, such as to implement an anonymous proof-verification process for tracing data consumption operations of the user device. The proposed device and methods provide a solution of proving and verifying traces of users' content viewing for example, without revealing traceable information that can be linked to the user. In addition, the same zk-SNARK proof protocol, or a different one, may be configured so that the verifier party can verify the blinded key is indeed related to the public key of the user device.

In addition still, the eligibility of the public key is also proven in the same or in a second cryptographic zk-proof protocol. The public key is deemed eligible if it emerges as a result of that proof that a copy of that key is in fact among a list of one or more pre-approved keys held in a registry (remote from the user device), maintained by the verifier party on by a third party. Again, no user traceable information is leaked, as it is only ciphertexts of, or in relation to, the pre-approved keys that are held in this registry.

The registry may be arranged as a blockchain and may manage a plurality of such electronic user devices.

In another aspect there is provided a computer program element, which, when being executed by at least one processing unit, is adapted to cause the processing unit to perform the method as per any one of the above mentioned embodiments.

In another aspect still, there is provided a computer readable medium having stored thereon the program element.

Definitions

"*User*" relates to a person operating or using the electronic computing user device.

"*Data consumption*" may relate to the processing of data by the computing device to produce output that is modulated in accordance with the processed data. However, data consumption as envisaged herein may not necessarily cause the device to produce such modulated output. Specifically, data consumption as envisaged herein includes installing some software on the user device to correct or improve the device's function. The data consumption also relates to a state of the computing device that enables such a processing. Such a state may be instantiated upon by user authentication.

"*zero-knowledge (zk-)proof protocol*" is a method by which one party (the prover) can prove to another party (the verifier) that the prover has some knowledge, without conveying any information apart from the fact that they have the said knowledge. The knowledge may be formulated as a statement. Some information may be disclosed however on purpose such as the amount of data consumed for instance, and this can be achieved by configuring the proof accordingly.

The proof protocol may be interactive or non-interactive. When interactive, a sequence of proof messages (including one or more challenges sent form verifier to prover) is generated and sent from one party to the other, processed there and may be sent back, in one or more iterations. If non-interactive, there is no interaction and it is sufficient for prover to provide the verifier with a one or more such proof messages, but no proof message (challenge) from the verifier back to the prover is required. The sequence of proof messages, or the single proof message, are/is processed by the verifier to arrive at a pre-determined result (as specified by the zk-protocol) that allows the verifier to conclude whether or not the prover has the claimed knowledge. If the verifier can conclude that he prover is in possession of the claimed knowledge, the zk-knowledge proof protocol has established a "zero-knowledge proof' for the said knowledge.

The *"proof message(s)"* are cryptographically processed data. The generation or processing of a proof message may include applying a cryptographic function to plaintext data obtain ciphertext(s), also referred to herein as a commitment, randomized or not. The ciphertext hides or *"blinds" the* processed (plaintext) data. Ciphertext may also be referred to herein as *"hidden"* or *"blinded"* data.

*"Cryptographic functions"* are one-way functions that map plaintext into ciphertext. One-way functions are hard to reverse but forward-computation is non-hard. Computational hardness is measured according to computational efforts. A function is hard to reverse if there is no polynomial time algorithm to achieve this, or if the probability for such reversal is arbitrarily small.

BRIEF DESCRIPTION OF THE DRAWINGS

Exemplary embodiments of the invention will now be described with reference to the following drawings, which, unless stated otherwise, are not to scale, wherein:

Figure 1 is a schematic block diagram of a network of computational nodes for the provision of data;
Figure 2 is a schematic block diagram of a user device;
Figure 3 is an illustrative block diagram of setting up a cryptographic proof mechanism to prove data consumption;
Figure 4 is an illustrative block diagram of performing a cryptographic proof protocol for proving data consumption; and
Figure 5 is a flow chart of a method of a cryptographic proof protocol for proving data consumption by an eligible party.

DETAILED DESCRIPTION OF EMBODIMENTS

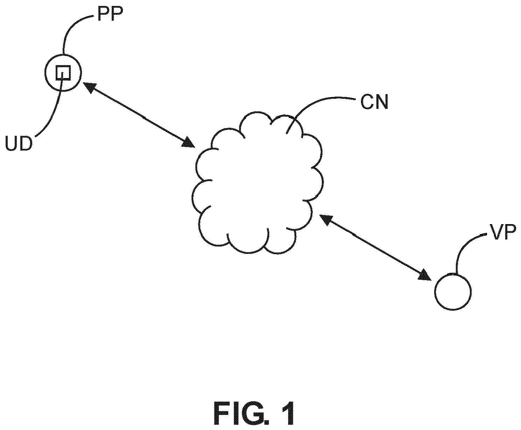

With reference to Figure 1, there is shown a schematic block diagram of a network of computational nodes PP, VP interconnected in a suitable communication network CN. The network CN may be wired, wireless, or partly both. In embodiments the network CN is configured at least in parts according to the internet protocol suite IPC/IP. One of the computational nodes will be referred to herein as the prover (party) PP, whilst the other node will be referred to herein as the data provider or the verifier (party) VP. It will be understood that there may be a plurality of such prover parties PP and/or a plurality of such verifier parties VP.

The nodes PP, VP are computational in that they include respective computational devices with one or more processors capable of processing electronic data including any one or more of sending data, receiving data, manipulating data, storing data, and so on.

In embodiments, the prover party PP may include one or more user devices UD, such as a desktop computer, a portable computing device such as a laptop, a smart phone, tablet and/or a dedicated streaming device, a video game console, or any other such electronic device capable of processing data.

Broadly, the verifier party VP makes available through the network CN to the prover party PP data for consumption by the user device UD. The data receivable from the verifier party VP may include any one or more of: audio data, video data, text data, a piece of software purchased by the user, or a combination of any two or more of the foregoing data types. The data may be supplied as one or more files or may be streamed as a data signal stream. The data may be consumed after completing a download first, such as may be the case if the data is supplied packaged in one or more data files. Alternatively, the data may be streamed, that is, consumption commences and/or continues as portions of the data are received at the user device UD.

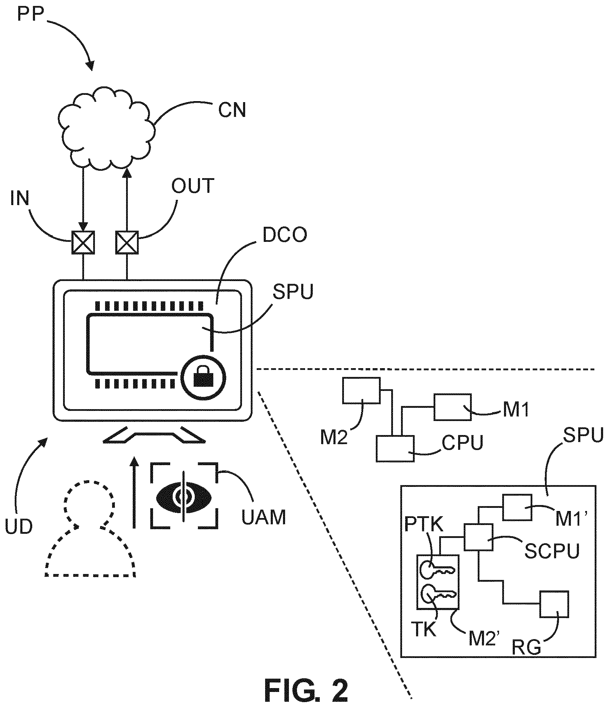

Data consumption by the user device may include processing the received data to produce modulated output that can be applied to a data consumption output device DCO as shown in Figure 2. The data consumption output device DCO of the user device UD produces sensory output discernable by a user. The sensory output is based on, in particular is modulated by, the data received at the user device UD from the verifier party VP. The user device may include hardware, software or both, sometimes referred to as a player component, that is configured to drive, based on the received data, transducers of the user device UD to produce the sensory output. For instance, in embodiments the user device is a (smart) television set (TV) as shown diagrammatically in Figure 2, including a display device as a data consumption output device DCO. The data receivable from the verifier party VP may include audio data and/or video data that can be processed by the player to drive the display device DCO so that the user can watch a motion picture or still imagery for instance. In addition or instead of a display device, the data consumption output device DCO may include one or more loud speakers to produce sound as modulated by the receivable data to play out for the user a song, an audiobook and so on. In another example, in addition or instead to an audio- and/or video-driven consumption output devices DCO, the consumption output device DCO may include a haptic user interface, such as a joy stick which can be actuated in accordance with the receivable data, such as in a video game console so as to enable the user to take part in a video game, and/or to haptically inform in particular visually/auditorily impaired users for instance. However, it is not necessarily the case herein that the consumable data drive such data consumption output device DCO. For instance, the data consumable may include software that is installable on the user device to fix some technical bugs or otherwise improve or correct function of the user device.

Broadly, and as will be explored more fully below, the proposed arrangement uses a cryptographic zero knowledge ("zk") protocol so that the prover party PP can cryptographically prove to the verifier party that data consumption is deemed to have occurred. Specifically, the prover party PP makes available to the verifier party cryptographically processed data, proof message(s), that cannot be, as such, linked to the identity of user device and hence cannot be linked to the user who owns the user device, thus preserving the privacy of the user, whilst still proving data consumption by an eligible party.

Specially, the cryptographically processed data made available by the prover party PP to the verifier party can be processed by the verifier party so as to convince the verifier party of two aspects: i) that the data consumption has occurred, and ii) that the data was consumed by an eligible prover party PP, in particular an eligible user device UD. The verifier party will not learn in generally about the identity of the prover party and in particular of the user device. The proving of data consumption as envisaged herein is achieved by executing one or more cryptographic zk-protocols. The cryptographic zk-protocols are preferably non-interactive but may also be interactive.

The privacy preserving manner of provable data consumption will allow the verifier party VP, after processing ciphertext proof message(s) received from the prover party, to verify that data consumption has occurred, without learning any other information. In particular, no information is gained by the verifier VP about the user identity. The verification is probabilistic in the sense that the probability for no such data consumption to have occurred is negligible, given the one or more ciphertext proof messages received from the prover party. To the extent that plaintext is used in the zk-protocols, such plaintext data does not furnish information about the user/user device that is not already public or that allows linking to the specific user/user device.

In general, in an interactive cryptographic zk-protocol, a sequence of specially configured ciphertext messages, the proof messages, are exchanged between the prover party and the verifier. This exchange may involve performing certain calculations on the received ciphertexts and the sending of the result(s) to the other party, and so on. The final result, one or more numbers, then constitute for the verifier a "proof of knowledge" that the prover has the knowledge as expressed in the statement of interest. If and only if the final result satisfies certain on or more conditions, proof of knowledge is established. The exchange of proof messages may include randomization, where one or more random tokens (such as numbers) are exchanged and incorporated in the messages. In non-interactive cryptographic zk-protocols, no sequence of such messages needs to be exchanged. A single message sent by the prover PP to the verifier VP may in instances be sufficient to establish proof of knowledge on the part of the prover PP. Non-interactive proofs are preferred herein for their efficiency and low communication/power consumption overhead, but interactive zk-proof protocols may still be envisaged herein in some embodiments, in particular for proving user device eligibility whilst data consumption is preferably proved herein using a non-interactive zk-proof protocol, in particular of the SNARK-type. SNARKS (Succinct Non-interactive Adaptive Argument of Knowledge) have been reported by Bitansky et al in their 2011 paper "From extractable collision resistance to succinct non-interactive arguments of knowledge, and back again ", ITCS '12 Proceedings of the 3rd Innovations in Theoretical Computer Science Conference, pp 326-349.

Certain types of zk-proofs are geared to statements of a specific type. Some zk-proof types especially envisaged herein are optimized for proving membership of an element in a set, referred to herein a set-membership zk-proofs. *Camenish et al* have reported such a set-membership proof in *"Efficient Protocols for Set Membership and Range Proofs"*, ASIACRYPT '08: Proceedings of the 14th International Conference on the Theory and Application of Cryptology and Information Security: Advances in Cryptology, December 2008, pp 234-252.

A set-membership zk-proof type is envisaged herein for the zk-proof protocol of user's public key eligibility, whilst a SNARK type proof is envisaged herein for the data consumption zk-proof protocol. The data consumption proof may further include proof of a quantity of data consumed. The consumed data may be measured by the number of different content identifiers CID (on which more further below) and/or the period of time of consumption. Alternatively, in embodiments the data consumption proof is restricted to provide a proof that data consumption has occurred, without divulging quantity.

Reference is now made to Figure 2 which shows a block diagram of a user device UD in more detail and envisaged in embodiments. The user device, such as a smart TV, laptop or similar as mentioned above, includes input and/or output interfaces IN, OUT for receiving and sending, respectively, data through the communication network CN. In particular, the input interface IN allows the user device UD to receive the consumable data made available by the data provider VP.

The user device UD includes a processor CPU coupled to primary memory M1 and/or secondary memory M2 such as a hard-drive. Instructions and data may be loaded into the primary memory M1. The CPU executes the instructions to process the data so loaded. In particular, the processor CPU is capable of processing the data received at input port IN and to drive for instance the data consumption output device DCO, such as a display device and/or loud speakers or any other data processing components that enable or at least facilitate data consumption.

In addition, in order to perform cryptographic functions and/or to administer at least part of the cryptographic zk-proof protocol in a manner to be described more fully below, the user device includes a secure processing unit SPU.

The secure processing unit SPU may include a secure processor SCPU that is capable of communicating with secure primary memory M1' and/or secure secondary memory M2'. The secure processing unit SPU may be arranged as a trusted platform module (TPM) or as a trusted execution environment (TEE), or in any other such secure arrangement.

In a TPM embodiment, the secure processing unit SPU is arranged physically separate from the device's system processor CPU, preferably arranged on a separate integrated circuit chip (IC) with its own secure main and/or secondary memories M1', M2'. However, this physical separation may not necessarily be required in all embodiments, and may be arranged instead as a trusted execution environment TEE where the secure processing unit SPU is realized by the system processor CPU itself, with isolated areas in the CPU and/or in the memories M1,M2, set aside for cryptographic processing or handling of sensitive data. A TEE architecture may for example include certain privileged instructions and/or certain privileged memory space portions which are only accessible by certain programs or data.

The secure processing unit SPU is configured to execute in particular symmetric or asymmetric encryption algorithms or digital signature schemes. To this end, a cryptographic public key TK is included the secure processing unit SPU. The public key TK is uniquely associated with the respective user device UD. For instance, this unique public key TK may be embedded in the secured processing unit SPU by the manufacturer of the user device UD. For instance, the public key TK may be stored in the secure memory M2'. However, the public key TK may not necessarily be so embedded into the secure processing unit SPU, but may instead be stored in the non-secured memory M2, or may be stored elsewhere, possibly externally, but is preferably accessible by the secure processing unit SPU if required. The secure memory M2'of the secure processing unit SPU may also hold a private key PTK associated with the public key TK, the two keys TK, PTK forming a cryptographic public-private key pair. By means of the private key and the public key TK, the secure processor SPU is capable of performing a number of different cryptographic functions such as encrypting/decrypting data or digitally signing data using any known digital signature scheme. For digitally signing, the private key associated with public key TK is used. The signature may be verified by any party using the public key TK. Storing the key pair in the secure processing unit allows protecting the user's privacy. The secure processing unit SPU may further include one or more random number RG generators to support administering randomized zk-proof schemes that require computing a commitment or secret as indeed envisaged herein and as will be explained in more detail below.

The user device UD further comprises a user authentication mechanism UAM, preferably fully integrated into the user device or at least coupled thereto. The user authentication mechanism UAM acts as a switch that allows switching the user device into two distinct modes: into a data consumption mode and into a data consumption barring mode. When in data consumption mode, the user device is capable of consuming data received at input port IN in the manner described above. However, when in data consumption barring mode, such data consumption operations are not allowed or are not fully allowed, in particular are blocked by the user authentication mechanism UAM. The data consumption mode can only be (re)enabled once the user furnishes the user authentication mechanism UAM with certain credentials that allow authenticating the user.

Many embodiments are envisaged for the user authentication mechanism UAM, preferably of the biometric type. The user authentication mechanism UAM may include any one or more of a finger print scanner, and a camera device. The camera device may be configured to allow iris scanning, or may be arranged as a depth sensing camera that allows capturing a 3D profile of the user's face. This camera based user authentication mechanism UAM is preferred herein as this can be fully integrated into the TV, laptop or other device that provides a visual data consumption output DCO. The camera based user authentication mechanism UAM allows quasi-continuous user credential capture at a defined sample rate. Specifically, the authentication can be enforced whilst the user engages with the device, that is, resides in front of the display device DCO to watch a video for instance.

In addition or instead of any such biometric-based user authentication mechanism UAM, the user authentication mechanism UAM may be text based. It may prompt the user to provide a textual or alphanumeric pass-phrase.

Audio-based user authentication mechanisms UAM are also envisaged where the user provides an audio passphrase, one or more utterances, which are picked up by a microphone-system of the user authentication mechanism UAM and are processed to decide whether or not to switch into data consumption mode.

Whilst the authentication process as implemented by the user authentication mechanism UAM may be a one-off operation in some embodiments, it is preferred herein in other embodiments that the authentication process is repeated in regular or irregular intervals during data consumption so as to ascertain with reasonable certainty the user's (continual) presence during data consumption by the user device.

Whenever a user can be biometrically identified by the user authentication mechanism UAM, the secure processing unit SPU creates digitally verifiable traces of data consumption. Specifically, the user device UD's secure processing unit SPU uses the private key associated with the said public key TK to sign a publicly known identifier CID of the content the device UD has received or is currently consuming. Optionally, a timestamp is appended to the signature, or the time stamp is signed also, together with the content identifier(s) CID. The time stamp indicates when consumption took place or when the indexed data has been received. A trace is hence a vector $TR = ((\overline{c_1}, t_1), (\overline{c_2}, t_2), \ldots (\overline{c_j}, t_j), \ldots)$, with $\overline{c_j}$ a signed content identifier CID value $c$ of a received data portion, consumed or received by device UD at time $t_j$. As mentioned,

the time stamp is signed also, so the vector trace includes $\overline{t_j}$, instead of $t_j$.

Such traces TR or a single content identifier CID (with our without time stamp) may thus as such be verifiable to be legitimate against the public key TK of the secure processing unit SPU. It is these traces TR that are envisaged herein to be submitted to interested parties VP, such as device manufactures, device maintenance provider, authorities, advertisers, licensors, or content owners, etc. for verification. However, whilst it may be desirable to share with those parties metrics on consumption of the data that such parties own or pay for, what is not desirable on data protection grounds is to allow the parties to identify and/or track the user by means of the public key TK as embedded in the secure processing unit SPU of user's device UD

As such, what is proposed herein is a two-layered solution for sharing the device UD produced traces TR with the verifier party VP and still protect user's privacy. Broadly, as envisaged herein, the secure processing unit SPU and the user authentication mechanism UAM of the user device are operating in concert to administer a part of the zk-proof protocol that is configured to prove data consumption without infringing the user's privacy. Specifically, a biometric or password based authentication as implemented by the user authentication mechanism UAM is used in combination with a first zk-proof protocol for data consumption, in particular a SNARK proof scheme, and with a second zk-proof of eligibility of the user device UD's public key TK. The eligibility is established by attempting to match in an anonymous manner a ciphertext of the public key (referred to herein as the blinded key BTK) against a pre-approved set of blinded copies of public keys held in a remote registry RG. The registry RG is preferably implemented in distributed ledger technology such as a block chain.

The logic implemented by the secure processing unit SPU is such that proof messages to enable the two zk-proof protocols to be conducted are released by the device UD only after capture of the correct user credentials by the user authentication mechanism UAM

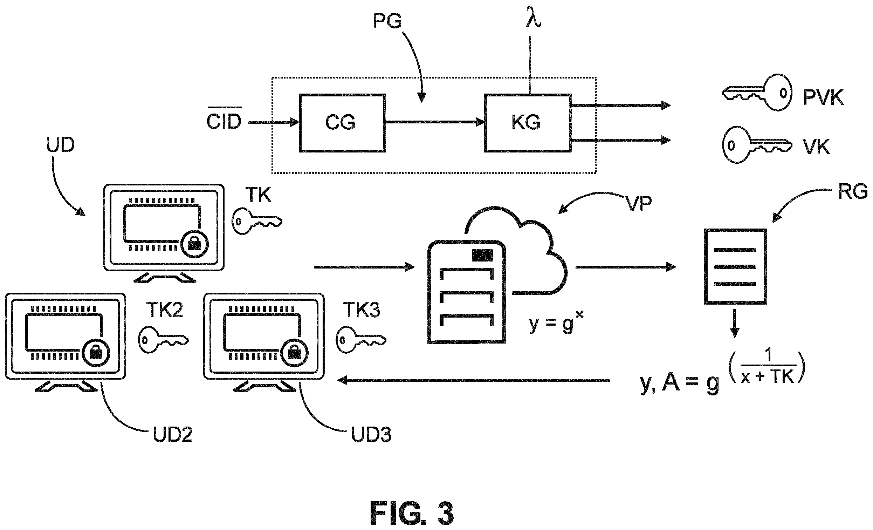

The administration of the proposed cryptographic data consumption zk-proof scheme may require in embodiments a set up phase. In the set up phase, cryptographically processed data, the one or more proof messages, are prepared. The one or more proof messages may then be made available by the prover party PP to the verifier VP so that the zk-proof protocols may be implemented. The setup phase may be a one-off operation, or the set-phase may be repeated multiple times during the data consumption for different data identifiers CID detected in the received data. The setup phase may include randomization as is indeed contemplated herein in preferred embodiments, to make the proof messages unique for each time the zk-protocols are run. The set-up phase will now be explained with reference to the block diagram in Figure 3.

The proposed solution involves the following two zk-protocols: i) SNARKS for data consumption zk-proof and a ii) set-membership zk-proof protocol against the list of ciphertexts of pre-approved public keys stored on the registry RG, to so prove key TK eligibility. The set-membership zk-proof protocol may in embodiments be configured as described in *Camenish,* but other types of set-membership zk-proof protocol may be used instead.

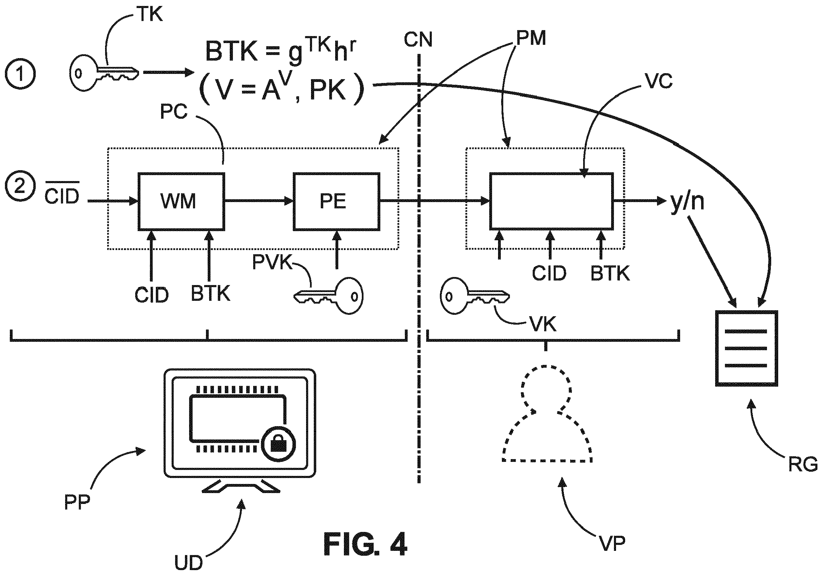

The setting up of the zk-SNARK proof mechanism may require a SNARK-proof mechanism generator PG. The proof mechanism generator PG derives a zk-SNARK proving key PVK and an associated verifying key VK. The proving key PVK and the verifier Key VK may be used in respective executables, one for the prover PP and for the verifier VP. The executables are pieces of code that implement the SNARK protocol as will be explained in more detail below at Fig 4.

The proof mechanism generator PG takes in placeholders for private input and public input. The private input includes i) the trace TR with the signed one or more content identifier CIDs as produced by the user device, the plaintext public key TK that is capable of verifying the signed one or more traces against the blinded key BTK, instructions on how the blinded key BTK has been computed from the plaintext key TK. The public data include the blinded key BTK and the list of the one or content identifiers CID themselves.

Broadly, in setting up the SNARK, the statement to be proven is formulated as a logical circuit or rank-1 constraint system, and this is mapped by a circuit generator CG of the proof mechanism generator PG into a polynomial. The polynomial may be defined over a finite field of a certain order, the order being a prime number. In some embodiments, the polynomial is defined on an elliptic curve over the finite field.

In the present case, a high level version of the statement may be formulated based on i)-iii) above as *"comm(TK) = BTK ∧ Sig$^{PTK}$(c) = $\overline{c}$, for each content identifier value* c", with *comm()* the commitment function used to blind the user device UD's public key TK, and *Sig()* the digital signature scheme used to sign the one or more content IDs CID with value(s) c, based on the private key PTK associated with the public key TK. The proof protocol as configured herein by the proof template generator PG is hence capable of proofing two aspects that together allow concluding data consumption of data indexed by content IDs CID: i) that the content IDs have the correct signature, and ii) that blinded key BTK is indeed correct and hence relates to the plaintext public key TK of user device UD Because of the above mentioned logic that the signing can only occur after collection of valid user credentials by the user authentication mechanism UAM, there is reasonable ground to believe that data consumption has occurred.

The proof template generator PG uses a shared secret λ, one or more random numbers, generated by the random generator RG. The shared secret λ fixes one or more points on the polynomial which gives rise to the proving key PVK and the verifier key VK The proving and verifier keys PVK, VK and the polynomial are then used in the executables to run the SNARK proof protocol as will be derailed below at Fig 4.

At this point, the polynomial is merely a polynomial template that includes place holders that represent the traces, the content identifiers and the blinded key BTK for the statement to be proven. When running the zk-SNARK-proof protocol, respective "live" values are then loaded into the placeholders of the template to compute a concrete proof message PK by the prover PP, which can then be verified by the verifier VK.

The use of the blinded key BTK herein is of note: instead of sharing the public key TK in plaintext, in the proposed solution the secure processing unit SPU of the user device UD (or a secure external device) creates a ciphertext of the public key TK, the blinded BTK. Preferably, the ciphertext BTK is unique for each data consumption proof message that is to be released. In particular, this uniqueness per proof message can be implemented by a randomized commitment function $comm^r(TK) \rightarrow BTK$, where $BTK$ is the ciphertext BTK and $TK$ is the public key TK, and $comm^r()$ is a one-way function, such as a hash function, and $r$ a random factor r generated for some or each proof message by the random generator RG. Using a randomized blinded key BTK is a safety measure against fake proofs. The use of such randomization in computing the blinded key BTK is one reason why the SNARK proof generator PG produces a template with a mere placeholder for the blinded key BTK, rather than hard-coding a fixed value of the blinded key into the proof template. However, whilst randomization of the blinded key is preferred, this is not necessarily required in all embodiments in which case a fixed value for the blinded key can still be hard-coded into the SNARK proof template.

In the SNARK scheme, homomorphic hiding functions may be used to hide coefficients of the above mentioned polynomial template that represents the statement to be proven. In embodiments, a pairing over finite groups may be used to define the homomorphic hiding functions. In some embodiments, a type-3 elliptic curve pairing is used. Specifically, a pairing over a 256-bit Barreto-Naehrig (BN) curve may be used. The pairing over the BN curve is formally denoted as:

$$\text{e: } G_1 \text{ x } G_2 \rightarrow G_T \qquad\qquad (1)$$

The Tate or Weil pairing schemes may be used in (1).

Out of efficiency reasons, for blinding the public key TK, generators $h,g$, of one of the two groups $G_1$ or $G_2$ may be used to define the randomized commitment function $comm^r(TK) = BTK = g^{TK}h^r$, with $TK$ the value of public key TK and $r$ the random factor $r$. However, any other, preferably randomized, commitment function may be used instead to compute the blinded key BTK.

The digital signature of the one or more content identifiers CID may be implemented in ECDSA (Elliptic Curve Digital Signature Algorithm) or in DSA (Digital Signature Algorithm), or any other digital signature scheme, preferably based on a cryptographic hash function $H()$ and the private key PTK. Operation of the digital signature scheme may be written as $Sig(c,t) = \overline{CID} = \overline{c} = \{H(c,t)\}^{PTK}$, with c a value of content identifier CID, and $t$ an optional time stamp for c, and $\{\}^{PTK}$ indicates an asymmetric encryption scheme based on the private key $PTK$. Any other digital signature scheme may be used to sign the content identifier CID. If there is a tracer vector $TR$ of such content identifiers TR= $((c_1,t_1),(c_2 t_2), (c_3 t_3), ... (c_k, t_k)))$, with a value $c_j$ for each content identifier CID (and optional time stamp $t_j$), the signature function $Sig()$ is applied component-wise for each component $(c_j,t_j)$ of the trace vector $TR$ to obtained a signed trace vector $(\overline{(c_1,t_1)},..., \overline{(c_k, t_k)})$.

Turning now to the second zk-proof-protocol, as proposed herein, the eligibility of the ciphertext key BTK is envisaged to be verifiable by the verifier VP, e.g. the advertiser, content owner, manufacturer, authority, etc., for otherwise fake data consumption proofs could be set up with a spurious public key. It is for this eligibility verification that the set-membership zk-proof protocol is used, for example as proposed by *Camenish* et al.

The set-membership zk-proof mechanism enables verifier VP to check the eligibility of ciphertext BTK against a publicly known set of ciphertexts $A_i$ of pre-approved public keys held in the registry RG. Note that in embodiments, this set of ciphertexts $A_i$ may be based on a randomization, and are hence unique and different for each use (so are preferably not to be reused), and key eligibility can thus not be established by a simple look up operation. This set of ciphertexts $A_i$ of pre-approved keys may be created by an administrative third party service, e.g., a consortium or other. All user devices UD, UD2, UD3 whose public key ciphertext $A_i$ is on the registry are deemed to have an appropriate user authentication mechanism UAM and are considered eligible.

In order to produce the ciphertexts $A_i$ of the pre-approved keys $TK_i$ a *Boneh-Boyen* digital signature scheme may be used. See for instance D Jao et al in "Boneh-Boyen Signatures and the Strong Diffie-Hellman Problem", published in H Shacham and B Waters (eds) "Pairing-Based Cryptography - Pairing 2009", LNCS, vol 5671, pp 1-6, Springer, Berlin, Heidelberg, 2009. In the following we refer to a given such ciphertext, ciphertext A, and to the public key TK from which it derives for a given user device UD, thus dropping the index i, with the understanding that the processing described herein may be applied to each of the public keys for the other devices UD2, UD3.

Specifically, and in embodiments, the ciphertext A of public key TK may be a digital signature as per $A = g^{(1/(x+TK))}$, with x a private key and $y$ an associated public key, $y = g^x$ of the registry RG administering entity, and g a generator of a group, for example $G_2$. The scheme is randomized, as the private key x may be selected at random, and may be so randomized repeatedly for each run of the set-membership zk-proof protocol. Instead of the *Boneh-Boyen* scheme, other digital signature schemes, randomized or not, may be used instead.

Respective ciphertexts A for embedded keys TK for all participating user devices UD, UD2, UD3 that meet the biometric login requirement are uploaded to the blockchain RG as a sequence of ciphertext values A and preferably the registry RG administering entity's public key $y$. The registry RG administering entity will be referred to herein as "the consortium". The respective ciphertext *A* of public key TK is sent back to the respective user device UD, UD2, UD3 and so is the consortium's public key $y$ to enable the set-membership proof protocol to be run as will be explained more fully below. The consortium's public key $y$ may be stored with the ciphertexts on the registry RG. The ciphertext *A* of the key TK and the public key $y$ of the consortium are preferably (but not necessarily) stored in memory M2' of the secure processing unit SPU. Computing the said cipthertext *A* and sending same back to the associated user device UD completes the setup for the set membership element zk-proof protocol. Instead of sending back the ciphertext A to the device UD, this may be pre-stored on the device by the manufacturer. If so pre-stored, the device UD may access the registry RG to check whether the associated ciphertext is still on the register RG. A ring signature (for example of the *Boneh Boyen* type) may be used so that a manufacturer in the consortium can sign to create ciphertext A on their own without disclosing to the rest of the consortium. Alternatively, the signing to produce the ciphertexts A may be administered by a smart contract.

Once the system is setup as described above in Figure 3, the system is now ready for deployment and can generate the two cryptographic proofs for data consumption and key eligibility, either once as a one-off, or in regular and/or irregular time based intervals repeatedly. This phase of proof protocol deployment with the proof messages is now illustrated in the block diagram of Figure 4 to which reference is now made.

Initially, the consumable data provided by provider VP is received at input port IN of user device UD. The data is assumed indexed by one or more identifier CID. The user is authenticated by authentication mechanism UAM of device UD. The user may now enjoy the content. In response to the user authentication, the secure processing unit SPU signs the one or more identifiers CID using its key TK, optionally appending time stamps to so produce a data consumption trace TR.

In a first step of the proof message generation, the secure processing unit SPU blinds the embedded public key TK to compute BTK. The blinding may be randomized. The blinded key BTK may be computed for example as described above as $comm^r(TK) = BTK = g^{TK}h^r$, with, as before, $r$ the random factor, and $h$, g the generators in one of the groups in the pairing. Other commitment schemes may be used instead to compute blinded key BTK, randomized or not.

In addition, a zero-knowledge proof message PK is computed by the secure processing unit SPU, based on the blinded key BTK and the ciphertext *A* of that same key TK previously received from the registry RG. In computing this proof message PK, it is ciphertext *A* that is itself randomizes by a factor v, thus never revealing any traceable information. The random factor v may be generated by the random number generator RG of the secure processing unit SPU. In embodiments, the randomization *V* of ciphertext *A* may be computed as $V = A^v$ over a finite field using exponentiation as a one-way function. The value of proof message PK is configured encode the fact that blinded key BTK and the randomized ciphertext *V* are commitments of the same public key TK. The value PK forms the proof message for the set-membership proof. In embodiments, the proof message PK may be computed by using the bilinear pairing in (1) to combine the randomized ciphertext V of ciphertext *A* with a generator g of one of the groups $G_1$, $G_2$. In a further or in the same proof message, the prover PP forwards the randomized ciphertext *V* to verifier VP. In a second step, the secure processing unit SPU implements a proof mechanism PM to carry out a part of the SNARK-protocol to prove data consumption and that the blinded key BTK indeed corresponds to the plaintext key TK. Specifically, the proof mechanism PM comprises the two above mentioned executables: a prover component PC executable by the prover PP (or by an external entity on behalf of prover PP), and a verifier component VC executable by the verifier VP (on which more further below). The prover component PC generates SNARK-proof message(s) and the verifier component processes the one or more messages to verify the proof. The prove message cryptographically encapsulates the knowledge to be proven. The first and second step may be reversed in order, although such reversal is less preferable from an efficiency point of view.

Turning first to the prover component PC in more detail, this includes a witness mapper WM and a proof evaluator circuit component PE. Operation of the prover component PC is based on private input data and public input data. The public data include the blinded key BTK and the (unsigned) list of the one or more content identifiers CID in plaintext to be verified. The private data include blinding data with which the blinding of the key TK is accomplished, e.g. the random factor r, the public key TK in plaintext, and the one or more signed content identifiers $\overline{CID}$, optionally with time stamps included. This public and private data are fed into the witness map WM. The witness map WM loads the public data into the above mentioned placeholders of the proof template, thereby fixing one of the polynomials previously defined by the proof template generator PG.

The prover valuator PE then computes, based on the prover key PVK, coordinates of one or more points on the said polynomial, and the points are then made available to the verifier component VC as the SNARK-proof message.

At this stage, the verifier party VP has received the following proof messages: polynomial points from the SNARK proof, and the set-membership proof message PK.

The verifier VP is now in a position to verify three aspects of interest herein, namely: i) the data consumption, ii) whether the key TK is correct and iii) whether key TK is eligible. Processing of the proof messages is done by the verifier party VP or by another computational node on behalf of the verifier party VP.

Turning now first in more detail to the verifier component VC, as to i), ii), which relate to the SNARK-protocol, the verifier party VP uses its computational entity to input into the verifier component VC i) the public data to be verified, that is, the one or more content identifiers CID in respect of which data consumption is to be verified, and ii) the blinded key BTK, along with iii) the verifier key VK. A related polynomial, related to the one used by the prover valuator PE, is then evaluated based on the public data and compared with the received proof message, the one or more polynomial points. If consistency is found between the points received and the points generated by the verifier component VP, the proof is accepted. If no consistency is found, this is flagged up and provision of data to the user device UD may be terminated, or any other suitable remedial action is taken.

As to iii), the eligibility proof of key TK, the verifier party VP may verify this based on the proof message PK and by accessing the set of ciphertexts A currently stored on the blockchain RG. The verifier VP may then implement the *Camenish-style* set-membership proof protocol with verifier component VC suitably configured. However, instead of using *Camenish,* any other cryptographic zk-proof on set-membership may be used instead herein.

In more detail, in order for the verifying party VP to verify eligibility of the user device, the blinded key BTK, may be matched against the set of pre-approved keys in the registry RG. The pre-approved keys themselves are held in signature ciphertexts A on the registry RG, such as an encrypted distributed ledger structure, implemented for example in block chain technology or as a smart contract, or in other similar technology. In other words, the eligibility proof corresponds to a set membership query that is conducted in an anonymized manner without revealing neither the plaintext of public key TK to be matched, nor the plaintexts of the pre-approved keys.

Whilst such a proof of set membership may in principle be conducted in the above described SNARK non-interactive zero knowledge scheme, and this is indeed envisaged herein in some embodiments, the computational overhead for such a proof would be considerable. This is because a SNARK-type proof of set membership knowledge may need to be based on a statement of the form *"A commitment relates to $a_1$, the commitment relates to $a_2$, ...."*, with $S=\{a_i\}$ members of the set S. Therefore, instead of using the SNARK set up for the set membership in relation to the public key BTK ciphertext, an interactive zero knowledge protocol scheme may be employed herein, similar to the one described by *Camenish et al* as cited earlier herein. In other words, the eligibility of the public key TK, or rather that of its blinded version BTK, is proved in an interactive manner which however requires the exchange of only small amounts of data so that can still be conducted efficiently.

The proposed *Camenish*-style zk-proof adopted herein is constructed so that it does not explicitly encode the set of approved public key ciphertexts *A* into the proof. Instead, in the proposed proof, the set of approved public key ciphertexts *A* is encoded in a manner that allows an order of $\mathcal{O}(1)$-sized proof for whether or not the committed element BTK belongs to that set. As in *Camenish,* in the proposed set membership proof, the above mentioned *Boneh-Boyen* digital signature scheme is used as common input to the set-membership proof-protocol to prove a statement of the form *"The prover knows a signature for a signature scheme used in set S for the committed element BTK"*. In other words, the statement of being a member of a set is reduced to a statement of having the "right" signature, which it turned out makes the set-membership zk-proof protocol easier to conduct.

In the set-membership zk-proof protocol the verifier VP uses the pairing *e* described above at (1) to combine the consortium's public key *y* and the revived ciphertext *V* to compute a result. This result is compared for consistency with the proof message PK. In the verification, the verifier VP takes advantage of the bilinearity of the pairing *e* (1). Because of the signature-based construction in the *Camenish*-type set-membership zk-proof protocol and similar such protocols, the verifier VP does not have to check explicitly in a loop against all ciphertexts held in the registry, but the comparison of results computed in the proof-protocol are sufficient for the verifier to verify whether the signature *V* is among the eligible signatures held. The bilinear pairing group signature scheme at (1) enables an efficient execution of the set membership-proof, but other signing schemes are also contemplated herein.

If the above mentioned consistency (e.g., equality) is established, the verifier VP accepts the proof. Eligibility of key TK is accepted, and the provision of data may continue or commence. If there is no consistency, eligibility of the blinded key BTK is contested and remedial action may be taken, such as suspending data provision to user device UD

In interactive embodiments, the above described protocol may further include the verifier VP sending one or more random challenges to the prover PP. The prover may then use to compute one, two or more linear combinations as responses. The responses may then be used by the verifier when computing the above mentioned result. Whilst in principle this set-membership zk-proof protocol may be conducted in this interactive fashion, the Fiat-Shamir heuristic may be applied to transform this set-membership zk-proof protocol into a non-interactive one. The Fiat-Shamir heuristic has been reported by A. Fiat and A. Shamir in "How to prove yourself: practical solutions to identification and signature problems", published in "Crypto 86", pp 186-194, Springer, 1987. In the Fiat Shamir heuristic, the above mentioned challenges by the verifier are replaced by hashes obtained by applying a cryptographic hash function to implement in sufficient approximation a random oracle query.

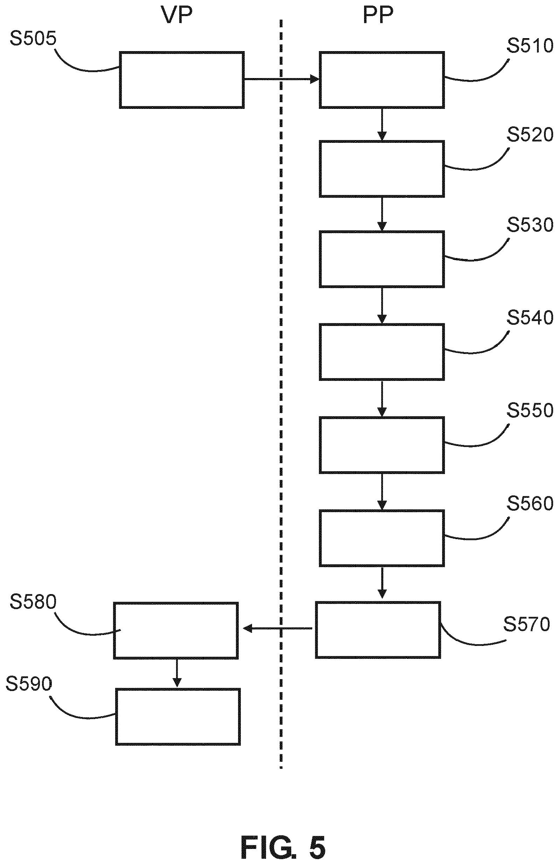

Reference is now made to Figure 5 which shows a flow chart of a computer implemented method to implement the above described cryptographic data consumption zk-proof and the zk-proof of the user device's public key eligibility. It will be understood however, that the following described steps are not necessarily tied to the systems previously described in Figures 1-4, and that the following steps may also be understood as a teaching in their own right. In Fig 5, the steps are arranged in two columns, one of the prover PP and one for the verifier VP to better indicate which entity, prover PP or verifier VP, performs the respective steps. However, it is not necessarily required for each step to be carried out physically by exactly one of the two parties, prover PP and verifier VP. Other computational nodes, different from or remote from the two parties, may implement the steps instead, for example on behalf of the respective party.

At step S505, the verifier VP publishes a content identifier (ID) CID, or a vector of such content IDs, ($c_1$, $c_2$, ..., $c_j$, ...), for which the verifier VP wishes to receive a zk-proof of consumption by a computing device and/or proof for eligibility of a public key of the user device. In embodiments of the publishing step S505, the content identifier(s) CID are included into data to be provided. For example, the content identifiers CID may be embedded as metadata or similar.

At step S510, the data to which the content IDs CID refer to is received at the user device.

At step S520, the user is authenticated by the user authentication mechanism of the device USD. Data consumption by the user device may now commence or resume.

In step S530, preferably after user authentication in step S520, the content identifier(s) CID is/are digitally signed by a secure agent, such as a secure processing unit SPU, to generate signed data identifiers $\overline{CID}$. The digital signing is done based on a private key PTK associated with the public key TK of the user device. A time stamp may be appended to the signed content identifier $\overline{CID}$, or a time stamp series is so appended, one for each identifier in the trace vector TR. The time stamp may indicate the time of receipt of the respective data portion or the time of consumption thereof. Optionally, the time stamps are also signed and included in the one or more signatures for the one or more content identifiers.

At step S540, the user device, in particular its secure processing unit, or another entity on behalf of the user device UD, computes a commitment for its public key TK. This operation results in the blinded public key BTK. This step may be executed after a trace of a certain length has been accumulated, or the step may be executed whenever the device wishes to prepare a proof message to be sent to the verifier party VP. The blinding is unique to the point of time it is generated. This unique blinding may be implemented by randomization. A random number r generated by a random number generator may be included into the computing of the blinding. A randomized commitment scheme based on generators g,h of a group of two groups over which a pairing is defined as described above at Figure 4 and eq (1). Any other preferably randomized commitment may be used instead.

At step S550 the user device, in particular the secure processing unit, produces a zero-knowledge proof message PK of the eligibility of blinded key BTK.

In more detail, the proof message is computed based on a randomization $V = A^v$ of ciphertext $A$. The randomization, a randomized commitment on $A$, may be based on a random number v provided by the random number generator of the user device. $A$ denotes the ciphertext of device's public TK previously produced by the verifier VP or other third party, for instance by the device manufacturer or any other party that maintains the registry RG of ciphertexts of pre-approved keys. The ciphertexts A in the registry are preferably obtained from the plaintext public keys of the approved user devices based on the *Boneh-Boyen* signature scheme. The user of the user device may have registered her user device with the registry previously to receive content from a media subscription service for instance. The registry may be arranged as a blockchain or in any other anonymized distributed ledger technology.

In general, because of randomization and the manner of encryptions used, V is different from the blinded key BTK. A simple look-up operation is therefore not possible to establish that BTK, and hence TK, is among the pre-approved keys on the registry.

Instead, a part of an interactive or non-interactive set-membership zk-proof-protocol is performed to produce the proof message in step S550. The proof message is capable of proving, to the verifier VP, when completing the set-membership zk-proof-protocol, the relation between the blinded key BTK and the randomized version $V$ of the keys $A$ held in the RG registry. The proof message PK for the set-membership zk-proof is computed based on ciphertext V, using the bilinear pairing (1). A *Camenish-type* set-membership zk-proof-protocol may be used, but any other set-membership zk-proof protocol may be used instead, such as described in Lan Nguyen, "Accumulators from bilinear pairings and applications", published in Alfred Menezes (Eds.) "Topics in Cryptology-CT-RSA 2005", LNCS, vol 3376, pp 275-292, Springer, 2005.

At step S560 a further zk-proof message is produced capable of proving, in a second zk-proof-protocol, data consumption of data associated with the content ID or content ID vector. In addition, the proof message may be capable of proving the amount of data consumed. Preferably this proof message is configured for use in a non-interactive zk-proof. Optionally, the proof message is further configured to prove in a zk-proof protocol that the blinded key is a correct commitment for the plaintext public key. Preferably the proof message is configured for use in a non-interactive zk-proof. Specifically and preferably, a zk-SNARK proof generator is used in step S560 to compute the one or two proof message. In SNARK embodiments of the zk-proof protocol, the proof message represents one or more points of an algebraic group, such as a curve over a finite field. The proof message is computed by inputting public data and private data the into the zk-SNARK proof component, along with a previously set up SNARK proving key PK for this proof. The private data includes the digitally signed content identifiers as per step S53, the plaintext public key TK and the random factor v used in step S550. The public data include the blinded key BTK of step S550 and the one or more unsigned content identifiers CID.

At step S570, the zk-SNARK proof message produced at step S460 and the zero-knowledge proof message PK for the eligibility of blinded key BTK as produced at step S550 is published.

At step S580, the verifier VP verifies data consumption based on the published zk-SNARK proof message and by using the verifier key VK associated with the prover key PK. In addition, the proof may include proving that the blinded key is a correct commitment for the plaintext public key.

At step S590, the verifier verifies the eligibility of blinded key BTK against the ciphertexts of pre-approved public keys held in the registry based on the proof message PK produced in step S550. The verification operation of set-membership at step S590 includes computing a result based on the ciphertext V using the bilinear group pairing such as (1) and comparing this result with the proof message.

The set-membership zk-proof-protocol is preferably non-interactive. In an interactive version of the set-membership zk-proof-protocol, the verification S590 may further include exchanging one or more proof messages (challenges) with the prover PP.

As the validity of the zk-proof protocol for the data consumption at steps S560, S580 relies on the eligibility of BTK, it may be preferable to conduct the eligibility proof protocol at steps S540, S560 first, and then run the data consumption proof protocol S570, S580 only when key BTK eligibility has been established.

The randomizations in steps S540, S550 are to maintain uniqueness for each zk-proof per content identifier, or per a plurality of such identifiers in a trace vector of an agreed length. In other words, once the proof is established, the method flow returns to step to process the next content identifier or the next plurality of such identifiers, and so on.

The steps (left column of Fig 5) pertaining to the prover PP may be performed by the secure processing unit SPU of the user device, but this is not necessarily so and some or all of these steps may be performed instead by a different, external computational entity such as cryptographic machine component.

The method may be used in the scenarios for remote diagnostics and checks of devices, or may facilitate dissemination of information with anonymized proof of consumption of said information on user devices. As a further application, the method may facilitate advertisement agents or content providers in tracing users' data consumption such as content viewing of certain contents without revealing users' private information.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims, be they numeric, alphanumeric, or a letter combination, should not be construed as limiting the scope.

**Claims**

1.  A computing device (UD), comprising:

    a user authentication mechanism (UAM) that allows switching the device from a data consumption barring mode into a data consumption mode upon authentication of a user credential;
    a trusted platform module (TPM) configured to:

    digitally sign, based on a private cryptographic key pair of the computing device (UD) including a private key (PTK) and a public key (TK), one or more data identifiers (CID) of consumable data provided by a data provider (VP) and receivable at an input interface (IN) of the device, upon the user authentication mechanism (UAM) authenticating the user credential and switching the device into said data consumption mode,
    encrypt the public cryptographic key (TK) to obtain a first ciphertext (BTK), and
    provide the first ciphertext (BTK) and the signed one or more data identifiers (CID) to facilitate a zero-knowledge proof of data consumption by the computing device (UD).

2.  Device (UD) of claim 1, wherein the first ciphertext (BTK) is randomized.

3.  Device (UD) of claim 1 or 2, wherein the user authentication mechanism (UAM) is configured to capture the user credential in form of any one or more of: i) a passcode, ii) biometric data.

4.  Device (UD) of claim 3, wherein the user authentication mechanism (UAM) comprises a camera configured to acquire as biometric data imagery of at least a part of the user.

5.  A cryptographic zero-knowledge prover component (PC, SPU), configured to:

    a) generate a proof message capable of being processed in a zero-knowledge protocol to verify i) one or more data identifiers (CID) associated with consumable data provided by a data provider to a computing device, and/or ii) a ciphertext (BTK) of a public key (TK) of the said computing device, and/or
    b) generate a proof message (PK) capable of being processed in zero-knowledge protocol to verify the ciphertext (BTK) of the said public key (TK) against a second ciphertext (A) of said public key TK.

**6.** Component of claim 5, wherein the said ciphertext (BTK) of the said public key (TK) is to be verified against a set of ciphertexts.

**7.** Component of claims 5 or 6, wherein said prover component is part of the device as per any one of claims 1-4.

**8.** Method for facilitating a zero-knowledge proof on data consumption by a computing device (UD), the computing device (UD) having a public cryptographic key (TK), and the device (UD) includes, or is associated with, a user authentication mechanism (UAM) that allows switching the computing device from a data consumption barring mode into a data consumption mode upon authentication of a user credential, the method, after user authentication, comprising the steps of:

verifying (S580) i) one or more data identifiers (CID) associated with consumable data provided by a data provider to the computing device, and ii) a ciphertext (BTK) of the said public key (TK); and/or

verifying (S590) the ciphertext (BTK) of the said public key (TK) against a second ciphertext (A) of said public key TK held in a registry (RG) remote from the said computing device (UD).

**9.** Method of claim 8, wherein the verifying (Sx40) by the second zero knowledge proof verifier component (VC) is against a set of such second ciphertexts held in the registry.

**10.** Method of claim 8 or 9, the one or more identifier previously signed based on a private key associated with the public key (TK).

**11.** Method of any one of claims 8-10, wherein the ciphertext (BTK) of the said public key (TK) is randomized and/or wherein the second ciphertext (A) of said public key (TK) is randomized.

**12.** Method of any of claims 8-11, wherein the user credential includes any one or more of: i) a password and ii) biometric data.

**13.** Method of facilitate an anonymized zero-knowledge proof on data consumption by a computing device, comprising the steps of:

generating (S540) a proof message capable of being processed in a zero-knowledge protocol to verify i) one or more data identifiers (CID) associated with consumable data provided by a data provider to a computing device, and/or ii) a ciphertext (BTK) of a public key (TK) of the said computing device, and/or

generating (S550) a proof message (PK) capable of being processed in zero-knowledge protocol to verify the ciphertext (BTK) of the said public key (TK) against a second ciphertext (A) of said public key TK.

**14.** A computer program element, which, when being executed by at least one processing unit (SPU), is adapted to cause the processing unit (SPU) to perform the method as per any one of claims 8-13.

**15.** A computer readable medium having stored thereon the program element of claim 14.

FIG. 1

**FIG. 2**

**FIG. 3**

① TK

$BTK = g^{TK_{h^r}}$

$(V = A^V, PK)$

② $\overline{CID}$

PC

WM

CID   BTK

PVK

PE

CN

PM

VC

CID   BTK

y/n

RG

VK

VP

UD

PP

**FIG. 4**

VP    PP

S505

S510

S520

S530

S540

S550

S560

S580

S590

S570

FIG. 5

| | Europäisches Patentamt | | | |
|---|---|---|---|---|
| | European Patent Office | **EUROPEAN SEARCH REPORT** | | Application Number |
| | Office européen des brevets | | | EP 20 17 7099 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANJIANG YANG ET AL: "Privacy-Preserving Credentials Upon Trusted Computing Augmented Servers", 7 May 2007 (2007-05-07), INFORMATION SECURITY PRACTICE AND EXPERIENCE; [LECTURE NOTES IN COMPUTER SCIENCE;;LNCS], SPRINGER BERLIN HEIDELBERG, BERLIN, HEIDELBERG, PAGE(S) 177 - 192, XP019057892, ISBN: 978-3-540-72159-8 * sections 3, 4 * | 1-4 | INV. H04L9/32 |
| A | FENG HAO ET AL: "Deleting Secret Data with Public Verifiability", IACR, INTERNATIONAL ASSOCIATION FOR CRYPTOLOGIC RESEARCH, vol. 20150414:151452, 14 April 2015 (2015-04-14), pages 1-14, XP061017998, [retrieved on 2015-04-14] * sections 3, 4 * | 1-4 | |
| A | US 2005/210270 A1 (ROHATGI SANTU [US] ET AL) 22 September 2005 (2005-09-22) * paragraph [0009] * * paragraph [0049] - paragraph [0053] * * paragraph [0069] - paragraph [0070] * | 1-4 | **TECHNICAL FIELDS SEARCHED (IPC)** H04L |

-/--

The present search report has been drawn up for all claims

| Place of search | Date of completion of the search | Examiner |
|---|---|---|
| Munich | 13 November 2020 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAHMOUD HAITHAM HASSAN M ET AL: "Secure Data Aggregation Mechanism for Water Distribution System using Blockchain", 2019 25TH INTERNATIONAL CONFERENCE ON AUTOMATION AND COMPUTING (ICAC), CHINESE AUTOMATION AND COMPUTING SOCIETY IN THE UK - CACSUK, 5 September 2019 (2019-09-05), pages 1-6, XP033649513, DOI: 10.23919/ICONAC.2019.8895146 [retrieved on 2019-11-08] * sections III, IV; figures 1, 2 * | 5-15 | |
| A | US 2008/052772 A1 (CONRADO CLAUDINE VIEGAS [NL] ET AL) 28 February 2008 (2008-02-28) * paragraph [0009] - paragraph [0029] * * paragraph [0070] - paragraph [0121] * | 5-15 | |
| A | FORD VITALY ET AL: "Secure and efficient protection of consumer privacy in Advanced Metering Infrastructure supporting fine-grained data analysis", JOURNAL OF COMPUTER AND SYSTEM SCIENCES, ACADEMIC PRESS, INC., LONDON, GB, vol. 83, no. 1, 7 July 2016 (2016-07-07), pages 84-100, XP029731824, ISSN: 0022-0000, DOI: 10.1016/J.JCSS.2016.06.005 * sections 2, 4, 5; figures 1, 3, 4, 7, 8 * | 5-15 | TECHNICAL FIELDS SEARCHED (IPC) |

The present search report has been drawn up for all claims

| Place of search | Date of completion of the search | Examiner |
|---|---|---|
| Munich | 13 November 2020 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

Europäisches
Patentamt

European
Patent Office

Office européen
des brevets

Application Number

EP 20 17 7099

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 20 17 7099

The Search Division considers that the present European patent application does not comply with the
requirements of unity of invention and relates to several inventions or groups of inventions, namely:

```
1. claims: 1-4

      securing consumable data access from a user device
                         ---

2. claims: 5-15

      zero-knowledge proof on consumable data
                         ---
```

## ANNEX TO THE EUROPEAN SEARCH REPORT
## ON EUROPEAN PATENT APPLICATION NO.

EP 20 17 7099

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2020

| Patent document cited in search report | Publication date | Patent family member(s) | Publication date |
|---|---|---|---|
| US 2005210270 A1 | 22-09-2005 | NONE | |
| US 2008052772 A1 | 28-02-2008 | CN 1898624 A | 17-01-2007 |
| | | EP 1700187 A1 | 13-09-2006 |
| | | JP 2007517303 A | 28-06-2007 |
| | | KR 20060111615 A | 27-10-2006 |
| | | US 2008052772 A1 | 28-02-2008 |
| | | WO 2005066735 A1 | 21-07-2005 |

EPO FORM P0459

For more details about this annex : see Official Journal of the European Patent Office, No. 12/82

**EP 3 917 076 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BITANSKY et al.** From extractable collision resistance to succinct non-interactive arguments of knowledge, and back again. *ITCS '12 Proceedings of the 3rd Innovations in Theoretical Computer Science Conference,* 2011, 326-349
- Efficient Protocols for Set Membership and Range Proofs. *ASIACRYPT '08: Proceedings of the 14th International Conference on the Theory and Application of Cryptology and Information Security: Advances in Cryptology,* December 2008, 234-252
- Boneh-Boyen Signatures and the Strong Diffie-Hellman Problem. **D JAO et al.** Pairing-Based Cryptography - Pairing 2009. Springer, 2009, vol. 5671, 1-6
- How to prove yourself: practical solutions to identification and signature problems. **A. FIAT ; A. SHAMIR.** Crypto 86. Springer, 1987, 186-194
- Accumulators from bilinear pairings and applications. **LAN NGUYEN.** Topics in Cryptology-CT-RSA 2005. Springer, 2005, vol. 3376, 275-292

26